Europäisches Patentamt

European Patent Office

Office européen des brevets

(11) Numéro de publication: **0 424 238 A1**

# DEMANDE DE BREVET EUROPEEN

(21) Numéro de dépôt: **90402886.7**

(51) Int. Cl.⁵: **F41G 3/22**, G02B 27/64

(22) Date de dépôt: **16.10.90**

(30) Priorité: **20.10.89 FR 8913744**

(43) Date de publication de la demande:
**24.04.91 Bulletin 91/17**

(84) Etats contractants désignés:
**DE FR GB IT NL**

(71) Demandeur: **THOMSON-CSF**
**51, Esplanade du Général de Gaulle**
**F-92800 Puteaux(FR)**

(72) Inventeur: **Guyomard, Patrick**

THOMSON-CSF SCPI Cédex 67
F-92045 Paris la Défense(FR)
Inventeur: **Grancoin, Bernard**
**Thomson-CSF SCPI CEDEX 67**
**F-92045 Paris La Défense(FR)**
Inventeur: **Pepin, Christian**
**Thomson-CSF SCPI-CEDEX 67**
**F-92045 Paris La Défense(FR)**

(74) Mandataire: **Turlèque, Clotilde et al**
**THOMSON-CSF SCPI**
**F-92045 PARIS LA DEFENSE CEDEX 67(FR)**

(54) **Dispositif de visée.**

(57) L'invention concerne un dispositif de visée pour orienter les lignes de visée (LV1, LV2) d'un système optronique qui comporte, par exemple, un dispositif émetteur optronique (14) et des dispositifs récepteurs optroniques (15, 16) . Un exemple de réalisation comporte :
- un équipage mobile (1) mû par un premier servomécanisme (9) autour d'un premier axe de rotation (AA′), et portant chaque dispositif émetteur ou récepteur optronique (14 à 16) ;
- un second équipage mobile, portant un miroir plan (18) et un gyroscope (19), mû par un second servomécanisme (17), autour d'un second axe de rotation (CC′) perpendiculaire au premier axe (AA′) et parallèle aux lignes de visée réfléchies (LV1′, LV2′), le second équipage et le second servomécanisme étant portés par le premier équipage (1).

L'invention peut être appliquée à tous les types de système optronique, notamment ceux portés par un véhicule.

FIG_3

EP 0 424 238 A1

## DISPOSITIF DE VISEE

L'invention concerne un dispositif de visée pour orienter la ligne de visée d'au moins un dispositif émetteur ou récepteur optronique placé sur un véhicule, par exemple un char, un hélicoptère ou un avion. Un système optronique comporte souvent plusieurs dispositifs récepteurs et un dispositif émetteur, travaillant dans des domaines de longueur d'onde différents les uns des autres, pour réaliser des fonctions d'imagerie et de télémétrie. Par exemple, un système peut comporter une caméra sensible aux radiations visibles, une caméra sensible aux radiations infrarouges lointaines, et un télémètre à laser ayant une longueur d'onde infrarouge proche.

Il n'est pas toujours possible d'utiliser une voie optique commune, pour des domaines de longueurs d'onde très différents. Un dispositif de visée travaillant dans plusieurs domaine de longueur d'onde simultanément comporte donc souvent deux voies optiques séparées et ayant deux lignes de visée parallèles.

Un dispositif de visée doit permettre un débattement de la ligne de visée, ou des lignes de visée, dans un plan vertical et dans un plan horizontal, avec une amplitude la plus grande possible et une précision de pointage très élevée. En particulier, le dispositif doit avoir une résistance élevée aux vibrations et aux changements de température.

Un premier type connu de dispositif de visée comporte un premier équipage mobile en rotation autour d'un premier axe de rotation, fixe par rapport au véhicule porteur, et un second équipage mobile en rotation autour d'un second axe de rotation. Ce second axe est porté par le premier équipage et est orthogonal au premier axe de rotation. Ces deux équipages constituent une suspension de type cardan, le second équipage portant l'ensemble du système optronique. Les deux équipages mobiles sont mus respectivement par deux servomécanismes comportant chacun un gros moteur pour obtenir des performances suffisantes en vitesse et en accélération, compte tenu de la masse élevée des deux équipages. Ces gros moteurs sont lourds, encombrants, et leur échauffement peut compromettre la précision du pointage. D'autre part, les structures mécaniques doivent être réalisées en faisant un compromis entre la rigidité et l'encombrement, ce qui conduit généralement à un coût de réalisation élevé et à une masse élevée.

Dans un second type connu de dispositif de visée, l'ensemble des dispositifs émetteurs et récepteurs optroniques est solidaire du véhicule porteur ou d'un dispositif de prépointage, les lignes de visée étant pointées au moyen d'un miroir monté sur un équipage mobile autour de deux axes de rotation orthogonaux, et mû par deux servomécanismes. Ce type de dispositif présente certains avantages par rapport au type précédemment décrit. L'inertie de l'équipage mobile est minimisée, donc la taille des moteurs et leur échauffement sont minimisés. La réalisation est généralement plus facile, en ce qui concerne la minimisation de l'encombrement. Cependant, ce type de dispositif a des inconvénients découlant du fait que le miroir mobile doit tourner autour de deux axes de rotation. Lorsque le miroir tourne autour d'un axe de rotation, par rapport à sa position moyenne, la section du faisceau qu'il réfléchit se restreint. A fortiori, lorsqu'il tourne simultanément autour de deux axes, la section se restreint encore plus. La taille de la pupille d'entrée étant fixée, notamment par la portée souhaitée pour le système optronique, les dimensions du miroir doivent être relativement importantes pour éviter une réduction de la section du faisceau d'entrée lorsque le miroir est tourné jusqu'à son débattement maximal autour de ses deux axes de rotation.

D'autre part, la précision de pointage, autour d'un axe de rotation est dégradée par la présence du mécanisme permettant la rotation autour du second axe de rotation. Pour une précision donnée, il est plus difficile de réaliser un miroir mobile autour de deux axes plutôt que de réaliser un miroir mobile autour d'un seul axe.

Le but de l'invention est de proposer un dispositif de visée n'ayant pas les inconvénients des dispositifs de types connus. L'objet de l'invention est un dispositif de visée comportant un miroir mobile selon un seul axe de rotation, cet axe de rotation étant porté par un équipage mobile autour d'un second axe de rotation orthogonal au premier, et cet équipage portant aussi l'ensemble des dispositifs émetteur ou récepteur optroniques. Ce dispositif a pour avantage que l'équipage mobile porteur de l'ensemble du système optronique n'étant orientable qu'autour d'un seul axe de rotation, le dispositif ne nécessite qu'un seul gros moteur ; et que, le miroir mobile n'étant orientable qu'autour d'un seul axe de rotation, l'asservissement de position de ce miroir est plus simple à réaliser, procure une meilleure précision, et nécessite un miroir moins encombrant.

L'invention sera mieux comprise et d'autres détails apparaîtront à l'aide de la description ci-dessous et des figures l'accompagnant :

- les figures 1 et 2 représentent respectivement deux vues externes de deux exemples de réalisation d'un dispositif de visée, selon l'invention ;
- la figure 3 représente schématiquement une vue cavalière de l'intérieur du premier exemple de réalisation ;
- la figure 4 représente schématiquement une vue de côté de l'intérieur du premier exemple de réalisation ;
- la figure 5 représente schématiquement une vue cavalière de l'intérieur d'un troisième exemple de réalisation.

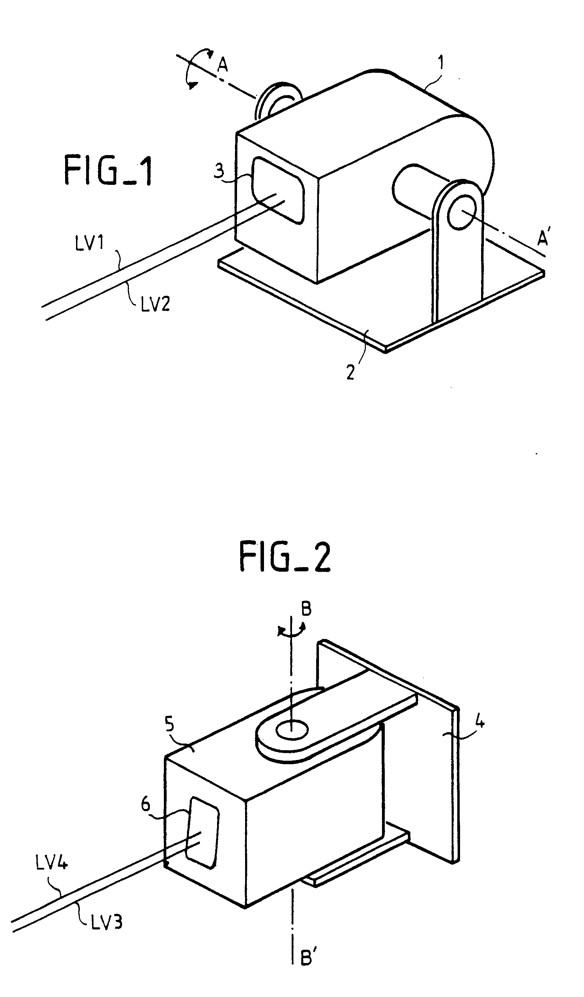

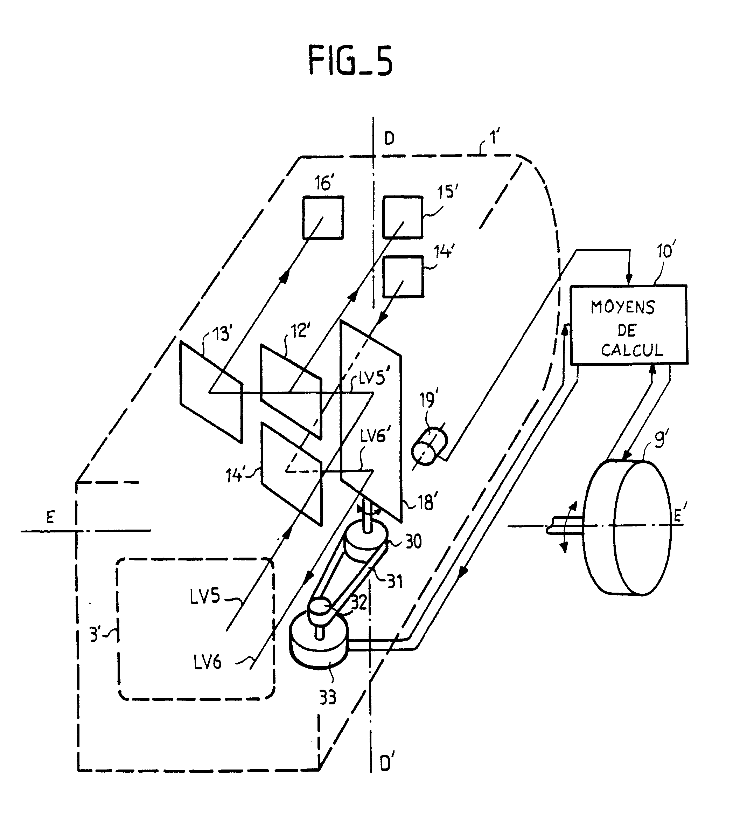

La figure 1 représente une vue externe d'un premier exemple de réalisation comportant un boîtier 1 contenant un ensemble de dispositifs émetteurs ou récepteurs optroniques, et qui est mobile en rotation autour d'un axe horizontal AA' porté par un support fixe 2 qui est fixé sur un char par exemple ou un aéronef. Le coffret 1 comporte un hublot 3. Deux lignes de visée parallèles LV1, LV2 sont orientées en site par une rotation du coffret 1 autour de l'axe horizontal AA', alors que l'orientation en gisement est réalisée au moyen d'un miroir mobile, non représenté, situé à l'intérieur du coffret 1 et décrit plus loin.

La figure 2 représente schématiquement une vue externe d'un second exemple de réalisation du dispositif de visée, selon l'invention. Il comporte un coffret 5 contenant un ensemble de dispositifs émetteurs ou récepteurs optroniques et qui est mobile en rotation autour d'un axe vertical BB'. Cet axe est porté par un support fixe 4 qui est fixé sur un char ou un aéronef par exemple. Le coffret 5 comporte un hublot 6. Deux lignes de visée LV3 et LV4 du système optronique, sont orientées en gisement par une orientation du coffret 5 autour de l'axe BB', alors qu'elles sont orientées en site au moyen d'un miroir mobile, non représenté, situé dans le coffret 5, non représenté sur la figure.

Le premier ou le deuxième exemple de réalisation est choisi selon l'application considérée. La rotation réalisée par le miroir mobile est plus rapide mais a un débattement inférieur au débattement de la rotation du coffret 1 ou 5. Le premier exemple de réalisation procure une plus grande vitesse d'orientation en gisement et un plus grand débattement en site. Le deuxième exemple de réalisation procure une plus grande vitesse d'orientation en site et un plus grand débattement en gisement.

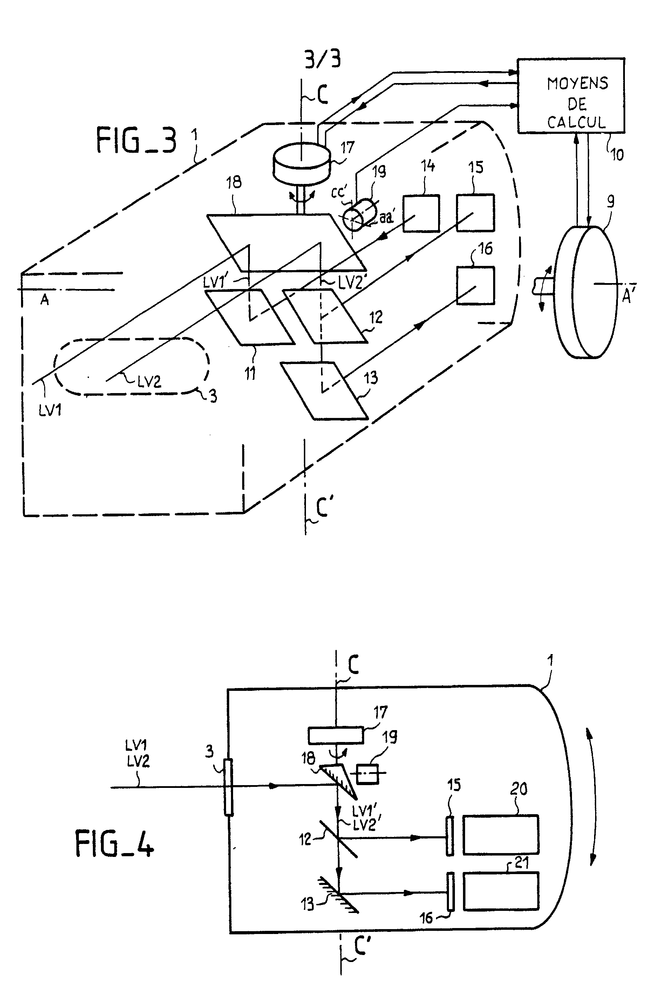

La figure 3 représente schématiquement, en vue cavalière, l'intérieur du premier exemple de réalisation. Le coffret 1 constitue un premier équipage mobile qui est mû, autour de l'axe de rotation AA', par un servomécanisme 9 constitué essentiellement d'un moteur et d'un capteur de position, et couplé à des moyens de calcul 10. Une première entrée et une première sortie des moyens de calcul 10 sont reliées respectivement à une sortie du capteur de position et à une entrée du moteur du servomécanisme 9.

Le coffret 1 contient et supporte un second équipage mobile qui est constitué essentiellement d'un miroir plan 18 mobile en rotation autour d'un axe CC'. L'axe CC' est orthogonal à l'axe AA' et fait un angle fixe, de 45°, par rapport au plan du miroir 18. Le second équipage est mû par un servomécanisme 17 constitué essentiellement d'un moteur associé à un capteur de position couplés à des moyens de calcul 10. Une deuxième entrée et une seconde sortie des moyens de calcul 10 sont reliées respectivement à une sortie du capteur de position et à une entrée du moteur du servomécanisme 17.

Ce second équipage mobile comporte en outre un gyroscope 19 solidaire du miroir 18 et ayant deux axes de sensibilité aux rotations. Ces deux axes de sensibilité sont orthogonaux entre eux et sont orthogonaux à l'axe de rotation de la toupie du gyroscope. Un axe de sensibilité aa' est parallèle à l'axe de rotation AA' et un axe de sensibilité cc' est parallèle à l'axe de rotation CC'. Dans cet exemple, le dispositif de visée est utilisé pour orienter deux lignes de visée parallèles : LV1 et LV2. L'axe de rotation de la toupie du gyroscope 19 est parallèle à la direction de ces deux lignes de visée, il est représenté en pointillés sur la figure.

Le coffret 1 contient en outre : deux miroirs plans, 11 et 13, solidaires du coffret 1 ; une lame dichroïque 12 solidaire du coffret 1 ; un dispositif optronique émetteur 14 ; et deux dispositifs optroniques récepteurs 15 et 16. Le dispositif 14 peut être un télémètre à laser, par exemple. Les dispositifs 15 et 16 peuvent être respectivement une caméra fonctionnant dans le domaine visible et une caméra fonctionnant dans le domaine infrarouge lointain, par exemple. Ces dispositifs ne seront pas décrits plus en détail car ils sont tout à fait classiques. Ils sont fixés au coffret 1.

La figure 4 représente schématiquement une vue de côté de l'intérieur de ce premier exemple de réalisation, pour montrer le cheminement des rayons lumineux. La lame dichroïque 12 laisse passer les radiations infrarouges lointaines et réfléchit les radiations visibles. La ligne de visée LV1 du dispositif émetteur 14 et la ligne de visée LV2 qui est commune aux dispositifs récepteurs 15 et 16, sont parallèles et sont réfléchis par le miroir 18, respectivement en direction du miroir 11 et de la lame dichroïque 12. Les lignes de visée LV1 et LV2 sont réfléchies respectivement selon une ligne LV1' et une ligne LV2' qui sont orthogonales aux lignes de visée LV1 et LV2. Le miroir 11 réfléchit la ligne LV1' en direction du dispositif émetteur 14. La lame dichroïque 12 réfléchit la ligne LV2' en direction du dispositif récepteur 15, pour ce qui concerne les radiations visibles. Les radiations infrarouges lointaines traversent la lame 12 puis sont réfléchies une nouvelle fois par le miroir 13, en direction du dispositif récepteur 16. La figure 4 montre schématiquement que des circuits électroniques 20 et 21, qui sont destinés à la mise en oeuvre des dispositifs optroniques, sont situés aussi à l'intérieur du coffret 1, à proximité immédiate des dispositifs émetteurs et les dispositifs récepteurs optroniques.

Dans ce premier exemple de réalisation, les lignes de visée LV1 et LV2 sont réfléchies par le miroir 18 respectivement selon une ligne LV1′ et une ligne LV2′, qui sont fixes par rapport au coffret 1 ; parallèles à l'axe de rotation CC′ ; et orthogonales aux lignes de visée LV1 et LV2.

La stabilisation du second équipage mobile est assurée par son inertie et par l'utilisation du gyroscope 19. Une troisième entrée des moyens de calcul 10 est reliée à une sortie du gyroscope 19. Ce dernier est utilisé comme gyroscope de référence : il fournit deux signaux traduisant respectivement deux angles de rotation autour des deux axes de sensibilité du gyroscope, et ces deux signaux ne s'annulent que lorsque le gyroscope a une orientation prédéterminée. Ces signaux permettent de réaliser un asservissement à grande bande passante. Le réalisation des moyens de calcul 10 pour réaliser cet asservissement, est tout à fait classique.

Dans le dispositif selon l'invention, la sensibilité du gyroscope selon l'un de ses axes est affectée par une rotation du second équipage mobile autour de l'autre axe de sensibilité du gyroscope. Elle est affectée par un facteur proportionnel au cosinus de cet angle de rotation. Lorsque le débattement de la tête de visée est faible, par rapport à $90°$, ce facteur peut être négligé. Lorsque le débattement n'est pas négligeable par rapport à $90°$, il est préférable de corriger l'effet d'une rotation autour du deuxième axe de rotation CC′, sur le signal traduisant un angle de rotation autour du premier axe, aa′, de sensibilité du gyroscope 19 et utilisé pour commander le servomécanisme 9. La mise en oeuvre de cette correction par les moyens de calcul 10 est à la portée de l'homme de l'art.

Le dispositif selon l'invention est susceptible de subir de nombreuses variantes. Par exemple, il pourrait ne pas comporter de miroirs de renvoi, 11 et 12, si les axes optiques des dispositifs optroniques 14 et 16 étaient placés dans le prolongement des lignes de visée réfléchies LV1′, LV2′.

La figure 5 représente schématiquement une vue cavalière de l'intérieur d'un troisième exemple de réalisation dans lequel, un coffret 1′ constitue un premier équipage mobile mû en rotation autour d'un axe EE′ par un servomécanisme 9′ constitué essentiellement d'un moteur associé à un capteur de position, et couplé à des moyens de calcul 10′. Une première entrée et une première sortie des moyens de calcul 10′ sont reliées respectivement à une sortie du capteur de position et à une entrée du moteur du servomécanisme 9′.

Le coffret 1′ comporte un hublot 3′ qui est traversé par la ligne de visée LV6 d'un dispositif émetteur optronique 14′ et par la ligne de visé LV5 commune à deux dispositifs récepteurs optroniques 15′ et 16′. Les dispositifs 14′ à 16′ sont solidaires du coffret 1′. Un second équipage mobile est constitué d'un miroir plan 18′ mobile en rotation autour d'un second axe de rotation DD′ qui est orthogonal au premier axe de rotation EE′. L'axe DD′ passe par le plan du miroir 18′. Les lignes de visée LV5 et LV6 sont réfléchies respectivement selon une ligne LV5′ et une ligne LV6′, qui sont fixes par rapports au coffret 1′ ; et sont parallèles à l'axe de rotation EE′. Elles sont orthogonales aux lignes de visée LV5 et LV6 seulement lorsqu'elles sont dans une position moyenne.

Cet exemple de réalisation comporte des éléments analogues à ceux du premier exemple de réalisation décrit précédemment. Les éléments analogues portent la même référence mais avec l'indice prime.

Cette disposition du miroir 18′ et de son axe de rotation DD′ provoque un effet Poggendorf, c'est-à-dire qu'une rotation d'un angle donné provoque une déviation des lignes de visée d'un angle deux fois plus grand. Le servomécanisme orientant le second équipage mobile est différent du servomécanisme 17, pour tenir compte de l'effet Poggendorf. Ce servomécanisme comporte : un moteur associé à un capteur de position, 33 ; une première poulie 32 ; une courroie de transmission 31 ; et une seconde poulie 30. La poulie 32 est montée sur un arbre du moteur alors que la poulie 30 est montée sur un arbre solidaire du miroir 18′. Ces deux poulies réalisent une transmission en rotation, ayant un rapport $\frac{1}{2}$. Une deuxième entrée et une seconde sortie des moyens de calcul 10′ sont reliées respectivement à une sortie du capteur de position et à une entrée du moteur du servomécanisme 30 à 33.

L'effet Poggendorf complique la stabilisation dynamique du miroir 18′ autour de l'axe DD′, car l'inertie du miroir autour de cet axe n'est plus une aide mais un handicap pour stabiliser le miroir. En effet, une déviation de la ligne de visée, d'un angle donné, doit être compensée en faisant tourner le miroir de la moitié seulement de cet angle.

Pour réduire l'effet négatif de l'inertie du miroir, celle-ci doit être la plus petite possible. Par contre, le moteur du servomécanisme 30 à 33 entraînant le miroir 18′ par l'intermédiaire d'un dispositif de transmission de rapport 1/2, il est souhaitable d'augmenter l'inertie de ce moteur pour améliorer la stabilisation du miroir.

Dans cet exemple de réalisation, la stabilisation du miroir 18′ est réalisée en outre au moyen d'un gyroscope 19′ solidaire du moteur 33. Une sortie du gyroscope 19′ est reliée à une troisième entrée des moyens 10′. Le gyroscope 19′ est un gyroscope à deux axes de sensibilité, analogue au gyroscope 19 du premier exemple de réalisation.

La transmission constituée par les poulies 32 et 30 et par la courroie 31 doit être d'une grande précision, mais sa réalisation est à la portée de l'homme de l'art. A cause de cette transmission de rapport $\frac{1}{2}$ , ce troisième exemple est plus délicat à réaliser que le premier exemple de réalisation, cependant il est avantageux par rapport aux dispositifs de types connus comportant un miroir unique, mobile autour de deux axes de rotation orthogonaux, car il est beaucoup plus simple d'orienter un miroir autour d'un seul axe, notamment il est beaucoup plus simple d'obtenir une grande précision de pointage.

**Revendications**

1. Dispositif de visée pour orienter la ligne de visée (LV1, LV2) d'au moins un dispositif émetteur (14) ou récepteur optronique (15, 16), caractérisé en ce qu'il comporte :
- un premier équipage mobile (1) mû par un premier servomécanisme (9) autour d'un premier axe de rotation (AA$'$), et portant chaque dispositif émetteur ou récepteur optronique (14 à 16) ;
- un second équipage mobile (18, 19) mû par un second servomécanisme (17) autour d'un second axe de rotation (CC$'$ ; DD$'$) perpendiculaire au premier axe (AA$'$), le second équipage et le second servomécanisme étant portés par le premier équipage (1).

2. Dispositif selon la revendication 1, caractérisé en ce que le second équipage (18, 19) comporte un miroir plan (18) ; et en ce que le second axe de rotation (CC$'$) est parallèle à un plan défini par la ligne de visée (LV1, LV2) et la ligne de visée (LV1$'$, LV2$'$) réfléchie par le miroir (18).

3. Dispositif selon la revendication 1, caractérisé en ce que le second équipage (18$'$, 19$'$) comporte un miroir plan (18$'$) ; et en ce que le second axe de rotation (DD$'$) est perpendiculaire à un plan défini par la ligne de visée (LV5, LV6) et la ligne de visée (LV5$'$, LV6$'$) réfléchie par le miroir (18$'$).

4. Dispositif selon la revendication 1, caractérisé en ce que le second équipage mobile (18, 19) porte un dispositif gyroscopique (19) sensible aux rotations selon un premier et un second axe de sensibilité (aa$'$, cc$'$) respectivement parallèles au premier et au second axe de rotation (AA$'$, CC$'$), et qui est couplé aux deux servomécanismes (9, 17), pour leur fournir deux signaux traduisant deux angles de rotation respectivement par rapport aux deux axes de sensibilité.

5. Dispositif selon la revendication 4, caractérisé en ce que le dispositif gyroscopique (19) est couplé aux deux servomécanismes (9, 17) par des moyens de calcul (10) corrigeant l'effet d'une rotation autour du second axe de rotation (CC$'$), sur le signal traduisant un angle de rotation autour du premier axe de sensibilité (aa$'$), utilisé par le servomécanisme (9).

6. Dispositif selon la revendication 5, caractérisé en ce que les deux signaux fournis par le dispositif gyroscopique (19) ne s'annulent que lorsque ce dernier a une orientation prédéterminée.

FIG_1

LV1
LV2

A
A'
1
3
2

FIG_2

B
5
4
6
LV4
LV3
B'

# FIG_5

FIG_3

3/3

MOYENS DE CALCUL

FIG_4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 031 781 (SAGEM)<br>* Le document en entier *<br>– – – | 1-6 | F 41 G 3/22<br>G 02 B 27/64 |
| X | EP-A-0 141 665 (FERRANTI)<br>* Le document en entier *<br>– – – | 1-6 | |
| A | CONFERENCE PROCEEDINGS OF THE MILITARY MICROWAVES'84, Londres, 24-26 octobre 1984, pages 116-120; T.B. WILSON: "Stabilised mirrors and their use in the E-O systems"<br>* Paragraphes: "Abstract", "Introduction", "Stabilised mirror mechanism", "Alternative gyro configuration" *<br>– – – | 1-6 | |
| A | US-A-3 641 261 (CHAPLIN et al.)<br>* Abrégé; figures 8,13 *<br>– – – | 1-6 | |
| A | FR-A-2 330 063 (FERRANTI LTD)<br>* Le document en entier *<br>– – – | 1-6 | |
| A | WO-A-8 200 515 (MARTIN MARIETTA CORP.)<br>* Abrégé; figures 5-8 *<br>– – – | 1-6 | DOMAINES TECHNIQUES RECHERCHES (Int. Cl.5) |
| A | US-A-3 697 848 (BORJESON)<br>* Abrégé; figures 1-3 *<br>– – – – – | 1-6 | F 41 G<br>G 02 B |

Le présent rapport de recherche a été établi pour toutes les revendications

| Lieu de la recherche | Date d'achèvement de la recherche | Examinateur |
|---|---|---|
| La Haye | 29 janvier 91 | BLONDEL F.J.M.L.J. |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
........................................................................
& : membre de la même famille, document correspondant